(19) Europäisches Patentamt
European Patent Office
Office européen des brevets

(11) **EP 2 498 155 B1**

(12) **EUROPÄISCHE PATENTSCHRIFT**

(45) Veröffentlichungstag und Bekanntmachung des Hinweises auf die Patenterteilung:
**06.01.2016 Patentblatt 2016/01**

(51) Int Cl.:
*G05B 19/042* *(2006.01)*     *G05B 19/05* *(2006.01)*
*G06F 9/44* *(2006.01)*     *G06F 17/30* *(2006.01)*

(21) Anmeldenummer: **11157952.0**

(22) Anmeldetag: **11.03.2011**

(54) **Verfahren zur Erkennung von Änderungen an SW-Schnittstellen und zum automatischen Anpassungen dieser Schnittstellen in einer Automatisierungslösung**

Method for recognition of SW-interface modifications and for automatical adaptation of said interfaces in an automation program

Procédé de reconnaissance de modifications d'interfaces software et d'adaptation automatique de ces interfaces dans un programme d'automatisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.09.2012 Patentblatt 2012/37**

(73) Patentinhaber: **Siemens Aktiengesellschaft**
**80333 München (DE)**

(72) Erfinder: **Meilland, Gerald**
**76135 Karlsruhe (DE)**

(56) Entgegenhaltungen:
EP-A2- 0 067 057     EP-A2- 1 770 459
WO-A1-00/29917     DE-A1- 19 704 855
DE-A1-102007 046 965     DE-A1-102009 017 816
US-A1- 2006 229 738     US-A1- 2007 078 540

EP 2 498 155 B1

**Beschreibung**

Die Erfindung betrifft ein Verfahren zum Betrieb eines Automatisierungs- oder Programmiergerätes gemäß dem Oberbegriff des Anspruchs 1.

Ein solches Verfahren zum Betrieb eines Automatisierungs- oder Programmiergerätes ist an sich bekannt. Die Anmelderin der vorliegenden Erfindung bietet z. B. als Automatisierungsgeräte die unter der Marke SIMATIC bekannten Automatisierungsgeräte an. Als Entwicklungsumgebung zum Erstellen von Automatisierungslösungen für solche Automatisierungsgeräte bietet die Anmelderin des Weiteren die unter der Marke STEP bekannte Entwicklungsumgebung an, z. B. die Entwicklungsumgebung mit der Bezeichnung "STEP 7". Die Erfindung eignet sich selbstverständlich für andere Arten von Automatisierungs- oder Programmiergeräten und für andere Entwicklungsumgebungen, so dass die vorstehenden Nennungen lediglich als beispielhaft aufzufassen sind. Leistungsfähige Automatisierungsgeräte, z. B. so genannte Personalcomputer als Prozessrechner, können die Funktionalität eines Programmiergerätes bereitstellen. Ansonsten kommen auch separate Programmiergeräte in Betracht. Ob die Entwicklungsumgebung auf einem Automatisierungsgerät oder einem Programmiergerät abläuft ist für die eigentliche Funktionalität der Entwicklungsumgebung auch nicht weiter von Bedeutung.

Eine Automatisierungslösung umfasst in an sich bekannter Art und Weise zumindest ein Computerprogramm oder eine Mehrzahl von Computerprogrammen. Bei einer Mehrzahl von Computerprogrammen kommt z. B. ein Computerprogramm zur Steuerung und/oder Überwachung des jeweiligen technischen Prozesses in Betracht, während ein weiteres Computerprogramm auf einem so genannten Bedien- und Beobachtungsgerät (HMI-Gerät) als Benutzerschnittstelle für den technischen Prozess und/oder die Automatisierungslösung abläuft und eine Einflussnahme auf den technischen Prozess und das Computerprogramm zu dessen Steuerung und Überwachung erlaubt. Bei komplexeren technischen Prozessen können sich mehrere Computerprogramme zur Steuerung eines z. B. in Teilprozesse untergliederten technischen Prozesses ergeben. Ebenfalls können sich mehrere Computerprogramme als HMI-Programme zur Beobachtung oder Einflussnahme auf solche Teilprozesse ergeben. Für die weitere Beschreibung der Erfindung ist die Komplexität des jeweiligen technischen Prozesses oder der resultierenden Automatisierungslösung jedoch ohne Belang. Es kommt einzig darauf an, dass zum Austausch von Daten innerhalb eines Computerprogramms oder ggf. auch zwischen jeweils zumindest zwei Computerprogrammen Schnittstellen - also Software-Schnittstellen - verwendet werden, wobei die Verwendung von Software-Schnittstellen selbst wiederum an sich bekannt ist.

Für solche Software-Schnittstellen - im Folgenden mitunter kurz auch nur als Schnittstellen bezeichnet - ist ebenfalls an sich bekannt, dass diese durch eine Anzahl von Elementen und jedes Element durch mindestens ein Attribut, z. B. einen Namen und einen so genannten Typ als Attribut, definiert sind. Ein einfaches Beispiel für eine Software-Schnittstelle ist eine Funktion, die in einem Computerprogramm die Anzahl von Tagen zwischen zwei Daten bestimmen soll. Dieser Funktion muss zumindest das Anfangsdatum und das Enddatum übergeben werden. Als Ergebnis liefert die Funktion einen Zahlenwert für die zwischen den beiden Daten liegende Anzahl von Tagen zurück. Eine Darstellung einer solchen Schnittstelle könnte z. B. als "Datum1", "Datum2", "Tage" erfolgen, wobei "Datum1", "Datum2" und "Tage" Elemente der Schnittstelle sind. Darüber hinaus ist jedes Element der Schnittstelle durch zumindest ein Attribut definiert. Im vorstehenden Beispiel sind die Namen "Datum1", "Datum2" und "Tage" bereits Attribute der jeweiligen Elemente, in denen sie einen Bezeichner der über die Schnittstelle ausgetauschten Daten darstellen. Darüber hinaus war bereits erwähnt worden, dass der Funktion ein Anfangs- und ein Enddatum übergeben werden soll, so dass als Typ für "Datum1" und "Datum2" ein Datentyp, der ein Datum mit Tagen, Monaten und Jahren kodieren kann, nahe liegt. Für den Rückgabewert der exemplarisch angenommenen Funktion, also die Variable Datum mit dem Namen "Tage", kommt ein Datentyp, der einen ganzzahligen Wert kodiert, also z. B. "byte", "integer", "longint", usw. in Betracht.

Wie erwähnt, sind solche Schnittstellen und deren Verwendung an sich bekannt. Bei Automatisierungslösungen, die sich durch eine stark modularisierte Struktur auszeichnen, sind Grundfunktionalitäten und benutzerdefinierte Funktionalitäten in Form von Unterprogrammen bereitgestellt und die Gesamtfunktionalität der Automatisierungslösung ergibt sich mit dem Aufruf eines oder mehrerer derartiger Unterprogramme, wobei jedes Unterprogramm selbst mehrere Unterprogramme aufrufen kann und auch auf diese Weise aufgerufene Unterprogramme selbst wieder Unterprogramme aufrufen können, usw. Ein Beispiel für Unterprogramme in Automatisierungslösungen sind so genannte Funktionsbausteine, die z. B. eine Regelungsfunktionalität implementieren. Darüber hinaus ist eine unüberschaubare Vielzahl anderer Funktionalitäten denkbar, wobei es im Folgenden auf eine spezielle Funktionalität auch nicht weiter ankommt, sondern lediglich auf die Tatsache, dass zum Aufruf eines Unterprogramms üblicherweise an dieses Daten übergeben werden, die das Unterprogramm be- oder verarbeitet, und dass üblicherweise ein aufgerufenes Unterprogramm als Ergebnis der Be- oder Verarbeitung Daten an das aufrufende Programm oder Unterprogramm (wenn dieses selbst ein aufgerufenes Programm ist) zurückgibt. Diese Übergabe von Daten an ein Unterprogramm und/oder Übernahme von Daten von einem Unterprogramm wird hier und im Folgenden als Austausch von Daten verstanden und für einen solchen Austausch sind die oben erwähnten Schnittstellen vorgesehen, wobei die Schnittstellen eine unterschiedliche Struktur haben können, insbesondere eine unterschiedliche Anzahl von Elementen, und für jedes Element eine Mehrzahl von Attributen in Betracht kommt.

Bei der Erstellung einer Automatisierungslösung mit einer Entwicklungsumgebung ergibt sich immer wieder die Situation, dass Schnittstellen geändert werden müssen, weil sich ein Funktionsumfang einer mit der Schnittstelle angesprochenen Funktionalität ändert. Als Beispiel für eine solche Funktionalität, also ein Unterprogramm oder dergleichen, wird hier und im Folgenden ein Funktionsbaustein angenommen. Wenn bei einem solchen Funktionsbaustein eine Anpassung der Funktionalität erfolgt, etwa indem neue Funktionalität hinzukommt, ist häufig auch eine Anpassung oder Ergänzung der Schnittstelle notwendig, um die neue Funktionalität für aufrufende Einheiten, z. B. andere Funktionsbausteine, verfügbar zu machen. Eine Änderung der Schnittstelle eines Funktionsbausteins zieht jedoch die Notwendigkeit nach sich, an jeder Stelle, an der in der Automatisierungslösung dieser geänderte Funktionsbaustein aufgerufen wird, die Versorgung der geänderten Schnittstelle anpassen zu müssen. Dies ist aufwendig und fehleranfällig.

Es sind bereits Ansätze bekannt, die zum Ziel haben, den Verwender einer Entwicklungsumgebung, mit der solche Automatisierungslösungen erstellt werden, in dieser Hinsicht zu unterstützen, indem Änderungen an einer Schnittstelle erkannt werden. Diese Lösungen sind bisher noch nicht ganz befriedigend, vor allem, wenn in einer Schnittstelle Elemente hinzugefügt oder gelöscht werden oder bereits bestehende Elemente geändert werden.

In der DE 197 04 855 A wird ein Verfahren beschrieben, wie zum Beispiel Speicheradressen von Softwaremodulen anhand ihres Namens leicht mit einem softwaretechnischen Baum aufgefunden werden können. In einem solchen Baum können neben der Speicheradresse eines Softwaremoduls auch Speicheradressen anderer Softwaremodule gespeichert sind und so eine Verknüpfung eines Moduls mit einem anderen Modul ausgedrückt werden. Die EP 0 067 057 A beschreibt Möglichkeiten zur automatischen Erkennung von Ähnlichkeiten zwischen Elementen.

Eine Aufgabe der Erfindung besteht entsprechend darin, ein Verfahren zum Betrieb eines Automatisierungsgerätes anzugeben, mit dem eine automatische oder zumindest eine gegenüber dem Stand der Technik verbesserte automatische Erkennung von Änderungen an Schnittstellen in einer Automatisierungslösung und eine nachfolgende Anpassung der Automatisierungslösung an eine geänderte Schnittstelle möglich sind.

Diese Aufgabe wird erfindungsgemäß mit den Merkmalen des Anspruchs 1 gelöst. Dazu ist bei einem Verfahren zum Betrieb eines Automatisierungs- oder Programmiergerätes der eingangs genannten Art insbesondere vorgesehen, dass ein Zustand einer von einer Änderung betroffenen Schnittstelle vor der Änderung zwischengespeichert wird, wobei diese zwischengespeicherte Schnittstelle im Folgenden zur Unterscheidung als alte Schnittstelle bezeichnet wird, dass zumindest ein Merkmal zu jeweils einem Element der alten Schnittstelle und einem Element der geänderten Schnittstelle - neue Schnittstelle - ermittelt wird und dass Elemente der alten Schnittstelle zu Elementen der neuen Schnittstelle anhand der jeweiligen Merkmale zugeordnet werden.

Als Merkmal zu einem Element einer Schnittstelle kommt grundsätzlich jedes zu einem solchen Element ermittelbare Kennzeichen in Betracht. Ausgehend von dem eingangs gewählten Beispiel kommt z. B. in Betracht, dass die Änderung der Schnittstelle deswegen erforderlich ist, weil die Funktion zum Berechnen der Tage zwischen zwei Daten einen größeren zeitlichen Abstand der Daten, z. B. mehrere Jahre, erlauben soll. Dafür ist erforderlich, dass der Datentyp des Rückgabewertes einen entsprechenden Wertebereich erlaubt. Insofern kommt als Datentyp z. B. der Typ "word" in Betracht, mit dem ein Datenbereich von 0 bis 65.535 darstellbar ist. Eventuell wird in Zusammenhang mit einer solchen Änderung auch der Name des Schnittstellenelementes geändert, z. B. von "Tage" in "Differenz". Als Merkmal für das betreffende Element der alten Schnittstelle mit dem Datentyp "byte" kommt z. B. ein Kennzeichen in Betracht, das kodiert, dass als Rückgabewert eine ganze Zahl zurückgegeben wird. Als Merkmal für das betreffende Element der neuen Schnittstelle mit dem Datentyp "word" kommt dann ebenfalls ein Kennzeichen in Betracht, welches kodiert, dass als Rückgabewert eine ganze Zahl zurückgegeben wird. Weil das betreffende Element auch nach der Änderung eine ganze Zahl - nur in einem theoretisch größeren Wertebereich - zurückgibt, bleibt die Zusammengehörigkeit beider Elemente erkennbar.

Der Vorteil der Erfindung besteht darin, dass abgesehen z. B. von neuen, zusätzlichen Elementen in einer geänderten Schnittstelle Anpassungen an geänderte Schnittstellen, z. B. wie vorstehend skizziert, in einer Automatisierungslösung relativ weitgehend automatisch vorgenommen werden können, so dass fehlerträchtige manuelle Anpassungen durch den Programmierer, also den Bediener der Entwicklungsumgebung, vermieden werden. Zudem ergibt sich für den Bediener selbstverständlich auch eine Zeitersparnis, wenn sämtliche Aufrufe der geänderten Schnittstelle automatisch angepasst werden und der Bediener nicht jeden Aufruf selbst aufsuchen muss.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Als Merkmal zu jeweils einem Element der alten Schnittstelle und einem Element der neuen Schnittstelle kommt ein Maß für eine Übereinstimmung eines Attributs der alten Schnittstelle mit einem Attribut der neuen Schnittstelle in Betracht. Ein Maß für eine Übereinstimmung zweier Attribute jeweils einer alten und einer neuen Schnittstelle kann grundsätzlich beliebig genau definiert sein. Im einfachsten Fall kommt in Betracht, dass eine Identität der beiden betrachteten Attribute untersucht wird und als Maß für eine Übereinstimmung der beiden Attribute z. B. "1" oder "100%" verwendet wird, wenn die beiden Attribute übereinstimmen, und "0" oder "0%", wenn die beiden Attribute in irgendeiner Form verschieden sind. Als Maß für eine Übereinstimmung kommen jedoch auch Kennziffern in Betracht, die Zwischenwerte kodieren und damit z. B. erlauben, Situationen zu erfassen, in denen sich ein Attribut, z. B. ein Name, nur geringfügig ändert, beispielsweise von "Datum1" in "DatumA". Hier kann als Maß für die Übereinstimmung die Anzahl gleicher Buchstaben in Bezug auf die Gesamtanzahl der Buchstaben angesetzt werden, so dass sich bei einer Änderung von "Datum1" in "DatumA" als Maß für eine Übereinstimmung beider Attribute trotz der Änderung noch ein relativ hoher Wert ergibt.

Wenn als Maß für eine Übereinstimmung eines Attributs der alten Schnittstelle mit einem Attribut der neuen Schnittstelle ein empirischer Korrelationskoeffizient fungiert, kann zur Erkennung von Änderungen in einer Schnittstelle auf mathematisch bekannte Verfahren zurückgegriffen werden. Ein empirischer Korrelationskoeffizient ist vergleichsweise einfach zu berechnen und wo normalerweise von zwei Mengen mit einer gewissen Anzahl von Stichproben ausgegangen wird, kommen als erste Menge das betrachtete Attribut der alten Schnittstelle und als zweite Menge das betrachtete Attribut der neuen Schnittstelle und als "Stichproben" die Zahlenwerte (z. B. im ASCII-Code) der Buchstaben, mit denen z. B. ein Name einer Variablen als Attribut ausgedrückt ist, in Betracht. Ein empirischer Korrelationskoeffizient als Maß für eine Übereinstimmung kann z. B. auch Situationen berücksichtigen, bei denen sich der Name einer Variablen von z. B. "Datum1" in "ErstesDatum" ändert, indem der empirische Korrelationskoeffizient das Vorhandensein gleicher "Stichproben" in beiden Mengen, also das Vorhandensein der Buchstaben "D", "a", "t", "u" und "m", erkennt.

Die Formel zur Berechnung eines empirischen Korrelationskoeffizienten (Korr) ist an sich bekannt und nachfolgend einkopiert, wobei x und y für die betrachteten Mengen, also die betrachteten Attribute der alten bzw. neuen Schnittstelle, stehen:

$$\mathrm{Korr} = \frac{\sum_{i=1}^{n} \left( (x_i - \ddot{\mathrm{x}}_n)(y_i - \ddot{\mathrm{y}}_n) \right)}{\sqrt{\sum_{i=1}^{n} (x_i - \ddot{\mathrm{x}}_n)^2 \sum_{i=1}^{n} (y_i - \ddot{\mathrm{y}}_n)^2}}$$

Für Attribute, die einem solchen oder ähnlichen Vergleich nicht ohne weiteres zugänglich sind, kommt in Betracht, dass als Maß für eine Übereinstimmung eines Attributs der alten Schnittstelle mit einem Attribut der neuen Schnittstelle ein in einer Matrix vorgegebener oder vorgebbarer Korrelationswert fungiert. Als Beispiel kann hier auf die unterschiedlichen Datentypen für Zahlen verwiesen werden. Datentypen zur Darstellung ganzzahliger Werte sind z. B. "byte", "integer", "longint", usw. Datentypen zur Darstellung rationaler Zahlen sind z. B. "real" und "double". Die Datentypen unterscheiden sich hinsichtlich des darstellbaren Wertebereichs und hinsichtlich der Genauigkeit. Mit dem Datentyp "byte" können z. B. natürliche Zahlen von 0 bis 255 dargestellt werden, während der Datentyp "integer" eine Darstellung von Zahlen üblicherweise von -32768 bis 32767 erlaubt. Ausgehend von dem darstellbaren Wertebereich und der darstellbaren Genauigkeit kann eine Matrix aufgestellt werden, die z. B. definiert, dass ein Attribut des Typs "byte" mit einem Attribut des Typs "integer" ähnlicher ist als mit einem Attribut des Typs "double" und mit einem Attribut des Typs "double" z. B. ähnlicher ist als mit einem Attribut des Typs "real", weil bei letzterem Beispiel neben der Änderung des Wertebereichs z. B. auch eine Änderung der darstellbaren Genauigkeit, nämlich zunächst nur ganze Zahlen und mit "real" auch reelle Zahlen, stattfindet. Anhand einer solchen Matrix, die grundsätzlich beliebig komplex sein kann und zumindest alle Basisdatentypen umfassen kann, kann je nach Attribut der alten Schnittstelle und Attribut der neuen Schnittstelle anhand der Matrix aus dieser ein Korrelationswert als Maß für die Übereinstimmung der beiden Attribute entnommen werden.

Zur Vereinfachung des Verfahrens ist es günstig, dass bei einer Mehrzahl von Attributen ein Maß für eine Übereinstimmung sämtlicher Attribute der alten Schnittstelle mit sämtlichen Attributen der neuen Schnittstelle ermittelt wird. Hier kommt grundsätzlich z. B. eine Summation der jeweils als Maß für eine Übereinstimmung einzelner Attributpaare ermittelten Werte in Betracht.

Wenn bei einer Mehrzahl von Attributen jedem Merkmal ein Gewichtsfaktor zugeordnet ist und als Maß für eine Übereinstimmung sämtlicher Attribute der alten und neuen Schnittstelle als Übereinstimmungsindikator eine mit den Gewichtsfaktoren gewichtete Summe der jeweils als Maß für eine Übereinstimmung einzelner Attribute ermittelten Werte gebildet wird, kann mit dem Gewichtsfaktor eine Relevanz der einzelnen Attribute der Schnittstelle festgelegt werden und darüber hinaus erlaubt der Gewichtsfaktor eine Normierung des sich ergebenden Übereinstimmungsindikators, speziell dann, wenn sich als Summe der vorgegebenen Gewichtsfaktoren ein Wert von 1 oder 100% ergibt.

Wenn in dem Verfahren jedes Element der neuen Schnittstelle mit jedem Element der alten Schnittstelle durch Ermittlung eines jeweiligen Übereinstimmungsindikators verglichen wird, ist die Untersuchung der alten und neuen Schnittstelle vollständig und es lassen sich auch Situationen erfassen, bei denen ein geändertes oder unverändertes Element in der neuen Schnittstelle an einer im Vergleich zur alten Schnittstelle anderen Position vorgesehen ist.

Bei einer besonderen Ausführungsform des Verfahrens ist vorgesehen, dass in einer Matrix, in der sämtliche Elemente der alten Schnittstelle durch eine Zeile oder Spalte und in der sämtliche Elemente der neuen Schnittstelle entsprechend durch eine Spalte bzw. Zeile repräsentiert sind, für jedes Elementepaar an der betreffenden Stelle der Matrix der jeweilige Übereinstimmungsindikator eingetragen wird und eine Zusammengehörigkeit eines Elements der alten Schnittstelle und eines Elements der neuen Schnittstelle anhand eines jeweils größten Wertes der Übereinstimmungsindikatoren in den betreffenden Zeilen oder Spalten der Matrix erkannt wird. Eine solche Matrix erlaubt die gleichzeitige Betrachtung aller Elemente der alten und neuen Schnittstelle und indem eine Zusammengehörigkeit zweier Elemente der alten und neuen Schnittstelle anhand eines jeweils größten Wertes der Übereinstimmungsindikatoren in den betreffenden Zeilen oder Spalten erkannt wird, ist eine gleichzeitige Berücksichtigung der mit den Gewichtsfaktoren gewichteten unterschiedlichen Maße der Übereinstimmung einzelner Attribute möglich. Auf diese Weise kann z. B. ein Element, das als Einziges in der alten und neuen Schnittstelle mit einem bestimmten Datentyp als Attribut verknüpft ist, bei dem sich aber der Name als weiteres Attribut vollständig geändert hat, so dass keine oder nur eine geringe Übereinstimmung besteht, z. B. "Tage" und "Differenz", als zusammengehörig erkannt werden.

Hinsichtlich der bei Änderungen an einer Schnittstelle automatisch durchgeführten Anpassungen in der Automatisierungslösung durch die Entwicklungsumgebung anhand der Zuordnung von Elementen der alten Schnittstelle zu Elementen der neuen Schnittstelle ist bei einer Fortführung der Ausführungsform, welche die Zugehörigkeit zweier Elemente der alten und neuen Schnittstelle anhand der oben beschriebenen Matrix erkennt, vorgesehen, dass bei einer erkannten Zusammengehörigkeit eines Elements der alten Schnittstelle und eines Elements der neuen Schnittstelle bei jeder Verwendung der alten Schnittstelle in der Automatisierungslösung das oder jedes Element der alten Schnittstelle durch das mit diesem als zusammengehörig ermittelte Element der neuen Schnittstelle ersetzt wird. Bei einer vollständigen Erkennung der Zusammengehörigkeit aller Elemente der alten und der neuen Schnittstelle kann aufgrund der dann möglichen automatischen Ersetzung unmittelbar eine lauffähige Automatisierungslösung generiert werden, ohne dass ein weiterer Eingriff des Benutzers der Entwicklungsumgebung erforderlich ist.

Die oben genannte Aufgabe wird auch mit einem Computerprogramm zur Implementierung des Verfahrens und seiner Ausgestaltungen gelöst. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Computersystem, z. B. ein so genanntes Programmiergerät, in dessen Speicher als Mittel zur Durchführung des Verfahrens und seiner Ausgestaltungen ein solches Computerprogramm, z. B. in Form einer Entwicklungsumgebung oder als Bestandteil der bereits erwähnten Entwicklungsumgebung, geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen:

FIG 1 einen technischen Prozess, ein zu dessen Steuerung und/oder Überwachung vorgesehenes Automatisierungsgerät mit einem Steuerungsprogramm und ein Programmiergerät mit einer Entwicklungsumgebung zur Erstellung einer Automatisierungslösung als Basis für ein von dem Automatisierungsgerät ausführbares Steuerungsprogramm,

FIG 2 eine exemplarische, tabellarische Darstellung von Elementen und Attributen einer Schnittstelle, wie sie in einer Automatisierungslösung zum Austausch von Daten zwischen Computerprogrammen oder davon umfassten Funktionsbausteinen oder dergleichen angelegt und bei Ausführung eines resultierenden Steuerungsprogramms zum Datenaustausch verwendet wird,

FIG 3 eine weitere Schnittstelle auf Basis der Darstellung in FIG 2 als Beispiel für eine mit der Entwicklungsumgebung aufgrund notwendiger Anpassungen in der Automatisierungslösung geänderte (neue) Schnittstelle,

FIG 4 eine tabellarische Darstellung einer Datenstruktur, wie sie in der Entwicklungsumgebung zum Vergleich einer alten und einer neuen Schnittstelle und zum Erkennen von zusammengehörigen Elementen der alten und neuen Schnittstelle angelegt sein kann,

FIG 5   eine tabellarische Darstellung einer Datenstruktur, wie sie bei Ausführungsformen des Verfahrens zum Vergleich alter und neuer Schnittstellen und zum Erkennen zusammengehöriger Elemente der alten und neuen Schnittstelle angelegt sein kann,

FIG 6   eine tabellarische Darstellung einer Datenstruktur für eine Korrelationsmatrix, wie sie zum Erkennen zusammengehöriger Attribute der alten und neuen Schnittstelle angelegt sein kann,

FIG 7   eine tabellarische Darstellung einer Datenstruktur für eine Matrix, wie sie zum Erkennen zusammengehöriger Elemente der alten und neuen Schnittstelle an- hand von dort eingetragenen Übereinstimmungsindikatoren angelegt sein kann, und

FIG 8   eine zusammenfassende Darstellung von aufgrund der exemplarischen Schnittstellen gemäß FIG 2 und FIG 3 und des hier und nachfolgend beschriebenen Verfahrens als zusammengehörig erkannten Elementen einer alten Schnittstelle (FIG 2) und einer neuen Schnittstelle (FIG 3) .

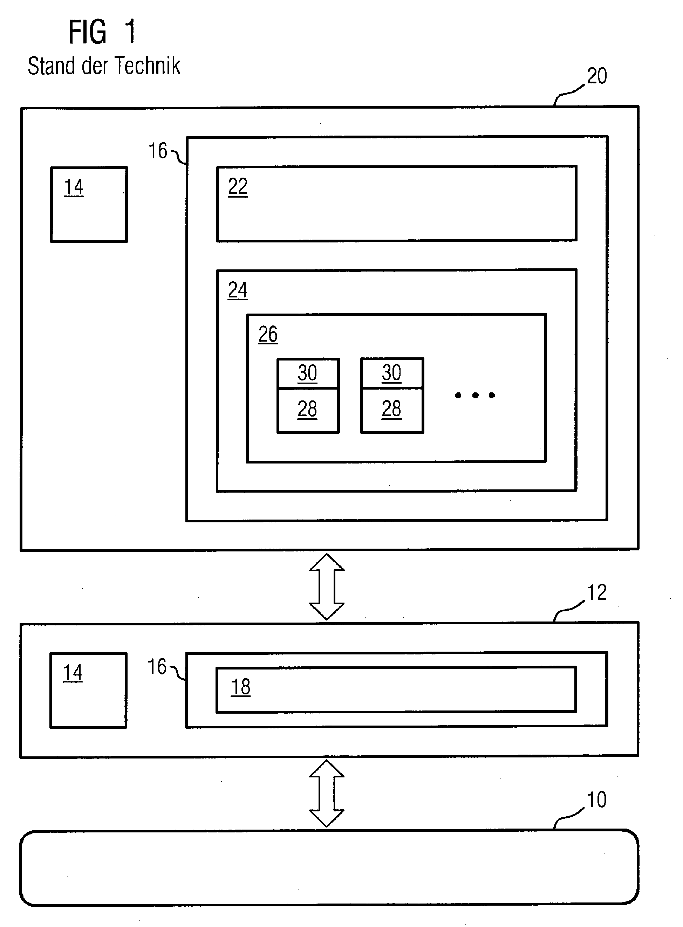

FIG 1 zeigt schematisch stark vereinfacht einen technischen Prozess 10, der durch zumindest ein Automatisierungsgerät 12 (nur eines dargestellt) gesteuert und/oder überwacht wird, wobei eine solche Steuerung oder Überwachung durch den Blockpfeil zwischen technischem Prozess 10 und Automatisierungsgerät 12 dargestellt ist. Das Automatisierungsgerät 12 umfasst in an sich bekannter Art und Weise eine Verarbeitungseinheit 14 nach Art eines Mikroprozessors oder dergleichen und einen Speicher 16. In den Speicher 16 ist als Automatisierungslösung ein Steuerungsprogramm 18 ladbar, das zur Steuerung und/oder Überwachung des technischen Prozesses 10 durch die Verarbeitungseinheit 14 beim Betrieb des Automatisierungsgerätes 12 ausgeführt wird. Das Steuerungsprogramm 18 ist Ergebnis einer Programmerstellung mittels einer auf z. B. einem Programmiergerät 20 ablaufenden Entwicklungsumgebung 22. Die Entwicklungsumgebung 22 ist ein Computerprogramm, das in einem Speicher 16 des Programmiergerätes 20 vorgehalten wird. Der Speicher 16 ist ein Speicher, den das Programmiergerät 20 umfasst oder auf den das Programmiergerät 20 Zugriff hat, also z. B. ein Halbleiterspeicher (RAM) und/oder ein Speicher z. B. mit einem elektromagnetischen Speichermedium, z. B. eine Festplatte oder dergleichen. Die Entwicklungsumgebung 22 als Computerprogramm wird im Betrieb des Programmiergerätes 20 in an sich bekannter Art durch eine Verarbeitungseinheit 14 nach Art eines Mikroprozessors oder dergleichen des Programmiergerätes 20 ausgeführt.

Das Ergebnis einer Arbeit eines Programmierers mit der Entwicklungsumgebung 22 ist eine Automatisierungslösung 24, die nach Fertigstellung als Steuerungsprogramm 18 in den Speicher 16 eines oder mehrerer Automatisierungsgeräte 12 zur Steuerung und/oder Überwachung des jeweiligen technischen Prozesses 10 ladbar ist.

Die Automatisierungslösung 24 umfasst ein oder mehrere Computerprogramme 26 (nur eines dargestellt) und bei einer Automatisierungslösung 24 mit genau einem Computerprogramm 26 entspricht das Computerprogramm 26 der Automatisierungslösung, so dass für eine solche Situation die beiden Begriffe synonym sind.

Ein Computerprogramm 26 einer Automatisierungslösung 24 umfasst üblicherweise ein oder mehrere Unterprogramme, bei denen es sich z. B. entsprechend der in der Automatisierungstechnik üblichen Terminologie um so genannte Funktionen, Funktionsblöcke oder Funktionsbausteine 28 handelt. Im Folgenden wird als Beispiel für beliebige Unterprogramme, Funktionen und dergleichen stets ein Funktionsbaustein 28 verwendet. Solche Funktionsbausteine 28 sind an sich bekannt. Des Weiteren ist an sich bekannt, dass für solche Funktionsbausteine 28 eine Schnittstelle 30 für deren Aufruf definiert wird. Eine solche Schnittstelle 30 erlaubt, wie bei jeder anderen Form von Unterprogrammen, Funktionen usw., einen Austausch von Daten in dem Computerprogramm 26, also im Falle des Funktionsbausteins 28 eine Übernahme von Daten aus dem Computerprogramm 26 in den Funktionsbaustein 28 und eine Übernahme von Daten aus dem Funktionsbaustein 28 in das Computerprogramm 26. Der Austausch von Daten kann dabei z. B. auch darin bestehen, dass ein erster Funktionsbaustein 28 einen zweiten Funktionsbaustein 28 aufruft und dabei an diesen zweiten Funktionsbaustein 28 Daten übergeben werden, die dieser ver- oder bearbeitet und in Zusammenhang mit einem Aufruf eines weiteren Funktionsbausteins 28 an diesen übergibt, der weitere Ver- und Bearbeitungen der Daten vornimmt, die dann ganz oder teilweise an den zunächst aufrufenden Funktionsbaustein 28 zurückgegeben werden und schließlich eventuell ganz oder teilweise an den ursprünglich aufrufenden Funktionsbaustein 28 gelangen. Aufrufe von Funktionsbausteinen 28 in Computerprogrammen 26 einer Automatisierungslösung 24 sind vielfältig und beliebig komplex. Hier kommt es lediglich darauf an, dass zum Austausch der Daten zwischen einzelnen Unterprogrammen, also z. B. Funktionsbausteinen 28, eine Schnittstelle vorgesehen ist und dass bei einer Mehrzahl von Computerprogrammen 26 einer Automatisierungslösung 24 auch zum Austausch von Daten zwischen jeweils zumindest zwei Computerprogrammen 26 solche Schnittstellen verwendet werden.

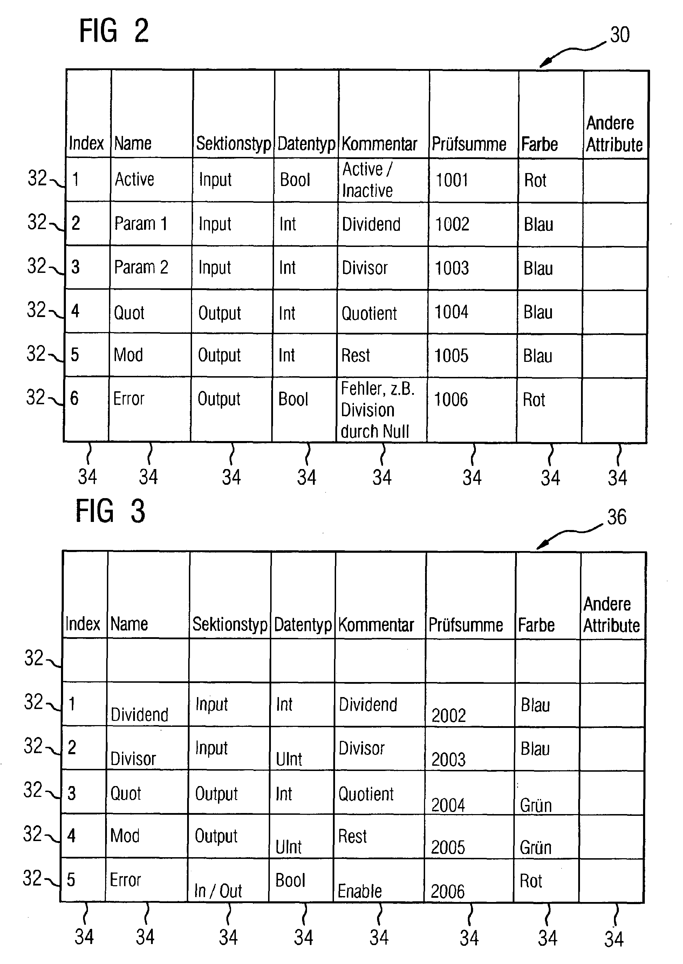

FIG 2 stellt nunmehr ein Beispiel für eine Schnittstelle 30 exemplarisch dar, anhand dessen die weitere Beschreibung fortgeführt wird. Bei der dargestellten Schnittstelle 30 handelt es sich um eine Schnittstelle 30 für einen Funktionsbaustein 28 (FIG 1), mit dem eine Division zweier Zahlen durchgeführt werden soll. Der Funktionsbaustein 28 ist dabei nicht weiter dargestellt und auf die konkrete Funktionalität eines mit einer Schnittstelle 30 wie in FIG 2 dargestellt mit Daten versorgbaren Funktionsbausteins 28 kommt es im Weiteren auch nicht an. Die Schnittstelle 30 umfasst eine Mehrzahl von in Zeilen dargestellten Elementen 32. Jedes Element 32 definiert ein über die Schnittstelle 30 austauschbares Datum. Jedes Element 32 umfasst darüber hinaus zumindest ein Attribut 34. Dargestellt sind mehrere Attribute 34 und üblich ist, dass ein über eine Schnittstelle austauschbares Datum zumindest durch einen Namen und einen Datentyp als Attribut 34 definiert ist. Im Einzelnen werden mit der in FIG 2 dargestellten Schnittstelle 30 an die lokalen Variablen mit den Namen "Param1" und "Param2" Werte für den Dividend und den Divisor in Form von ganzen Zahlen (Datentyp "Int" oder "Integer") übergeben (Sektionstyp: "Input"). Als Resultat der internen Verarbeitung gibt der Funktionsbaustein 28 über dessen lokale Variablen mit den Namen "Quot" und "Mod" den Quotient als Ergebnis der Division und einen eventuellen Rest jeweils als ganze Zahlen (Datentyp: "Int") zurück (Sektionstyp: "Output"). Ein eventueller Fehler wird in der lokalen Variable "Error" an das aufrufende Computerprogramm oder den aufrufenden Funktionsbaustein 28 zurückgegeben. Die Funktionsweise von Softwareschnittstellen zwischen Unterprogrammen wie Funktionsbausteinen 28 und dergleichen ist im Übrigen bekannt und braucht hier nicht weiter erläutert zu werden. Jetzt soll davon ausgegangen werden, dass an der Schnittstelle 30 gemäß FIG 2 - alte Schnittstelle - mittels der Entwicklungsumgebung 22 (FIG 1) Änderungen erforderlich sind und dass die in FIG 3 dargestellte Schnittstelle - neue Schnittstelle 36 - das Ergebnis dieser Änderungen ist.

FIG 3 zeigt, dass das bisherige Element 32 mit dem Namen "Aktiv" als Parameter 34 entfallen ist. Bei dem neuen ersten und zweiten Element 32 haben sich im Vergleich zu den entsprechenden zweiten und dritten Elementen 32 in der alten Schnittstelle 30 die Namen als Attribute 34 geändert und darüber hinaus sind weitere Änderungen vorgenommen, die aus Gründen der Übersichtlichkeit in der in FIG 3 dargestellten neuen Schnittstelle 36 durch Fortführung des alten Wertes des jeweiligen Attributs 34 in durchgestrichener Form kenntlich gemacht sind.

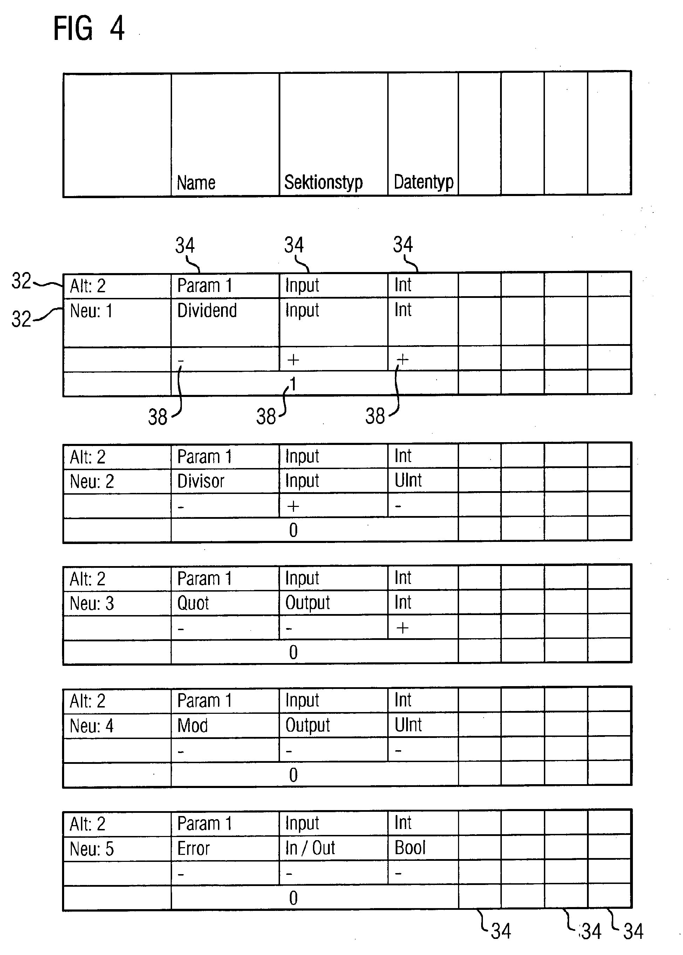

Zum Erkennen eventueller Änderungen an einer Schnittstelle 30 mittels der Entwicklungsumgebung 22 wird die von der Änderung betroffene Schnittstelle 30 in der Form vor der Änderung zwischengespeichert. Diese alte Schnittstelle 30 (FIG 2) wird stets in Bezug genommen, wenn Unterschiede zwischen der alten Schnittstelle 30 und der Schnittstelle nach der Änderung, also der neuen Schnittstelle 36 (FIG 3), automatisch durch die Entwicklungsumgebung 22 ermittelt werden. Dazu wird zumindest ein Merkmal zu jeweils einem Element der alten Schnittstelle 30 und einem Element der neuen Schnittstelle 36 ermittelt. Anhand solcher Merkmale ist eine automatische Zuordnung von Elementen 32 der alten Schnittstelle 30 zu entsprechenden Elementen 32 der neuen Schnittstelle 36 möglich. Dies wird im Folgenden mit weiteren Details anhand von FIG 4 erläutert.

FIG 4 zeigt einen Vergleich des in der alten Schnittstelle 30 in der dortigen zweiten Zeile dargestellten alten Elements 32 mit allen Elementen 32 der neuen Schnittstelle 36. Der Vergleich kann sich auf alle Attribute 34 der jeweiligen Schnittstellen 30, 36 beziehen. Wie in FIG 4 aus Gründen der Übersichtlichkeit gezeigt, kann sich der Vergleich auch auf bestimmte Attribute 34 beschränken. Art und Umfang des Vergleichs werden durch die jeweilige Implementierung des Verfahrens in einem Computerprogramm festgelegt.

FIG 4 zeigt, dass die Elemente 32 der beiden Schnittstellen 30, 36 hinsichtlich ihrer Attribute 34 "Name", "Sektionstyp" und "atentyp" verglichen werden. Das Vergleichsergebnis ist jeweils unter den betreffenden Attributen mit einem Minus und einem Plus dargestellt, wobei ein Minus einen Unterschied und ein Plus eine Übereinstimmung anzeigt. Aus diesem Vergleich kann ein Merkmal 38 ermittelt werden. Das Merkmal 38 bei dem Beispiel in FIG 4 ist zu jeweils einem Element 32 der alten Schnittstelle 30 und einem Element 32 der neuen Schnittstelle 36 ermittelt worden, indem dort jeweils drei Attribute 34 betrachtet wurden. Genauso ist die Betrachtung nur eines Attributes oder von mehr als drei Attributen möglich. FIG 4 zeigt aber bereits auch, dass als Merkmal 38 genauso jeweils ein Maß für eine Übereinstimmung genau eines Attributs 34 der alten Schnittstelle 30 mit genau einem Attribut 34 der neuen Schnittstelle 36 in Betracht kommt. Dann ist das unmittelbare Vergleichsergebnis, also z. B. "Plus" oder "Minus", als Merkmal 38 anzusehen. Bei einer Mehrzahl von Attributen 34 bietet es sich an - wie dargestellt - als Merkmal 38 ein Maß für eine Übereinstimmung mehrerer oder sämtlicher Attribute 34 der alten Schnittstelle 30 mit mehreren oder sämtlichen Attributen 34 der neuen Schnittstelle 36 zu ermitteln. Das Maß für eine solche Übereinstimmung ist bei dem in FIG 4 zuoberst dargestellten Vergleich durch eine "1" dargestellt und dieses Ergebnis ist das zu den beiden Elementen 32 der alten und neuen Schnittstelle 30, 36 ermittelte Merkmal 38. Die Ermittlung kann hier z. B. darin bestehen, dass bei zumindest zwei Übereinstimmungen der Attribute 34 der Wert "1" und ansonsten der Wert "0" ermittelt wird; es müssen also zumindest zwei identische Übereinstimmungen der betrachteten Attribute 34 vorliegen, damit auf eine ausreichende Ähnlichkeit entschieden wird.

Die Vergleiche der anderen Elemente 32 der neuen Schnittstelle 36 mit dem einen untersuchten Element 32 der alten Schnittstelle 30 sind in FIG 4 im Weiteren dargestellt. Es ergibt sich, dass jeweils weniger als zwei Übereinstimmungen vorliegen, so dass als Merkmal 38 jeweils der Wert "0" ermittelt wird und im Ergebnis anhand des Merkmals 38 mit dem Wert "1" nur für die beiden in FIG 4 zuoberst dargestellten Elemente 32 der alten und neuen Schnittstelle 30, 36 eine hinreichende Übereinstimmung festgestellt wurde.

Für einen Aufruf eines Funktionsbausteins 28 mit einer Schnittstelle 30 in Form der in FIG 3 dargestellten neuen Schnittstelle 36 bedeutet dies, dass der Wert einer Variablen, der zuvor im Zusammenhang mit dem Funktionsaufruf an die Variable mit dem Namen "Param1" zugewiesen wurde, nunmehr an die Variable mit dem Namen "Dividend" zugewiesen wird. Diese Anpassung kann durch die Entwicklungsumgebung 22 automatisch erfolgen, so dass die mit der Änderung der Schnittstelle einhergehenden notwendigen Anpassungen automatisch erfolgen können.

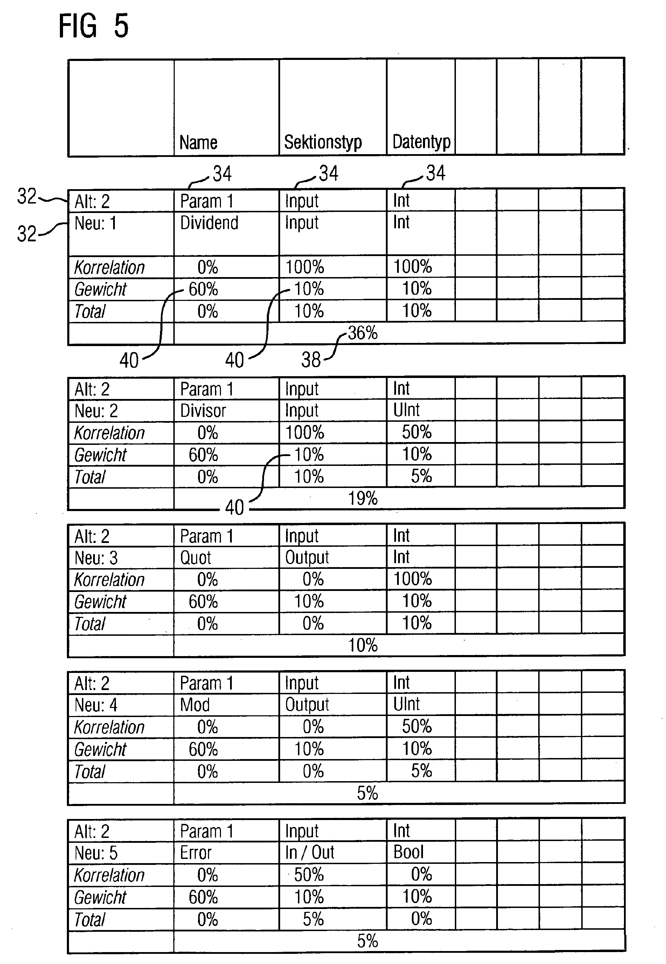

FIG 5 zeigt nunmehr eine besondere Ausführungsform des Verfahrens. Diese basiert zunächst darauf, dass jedem Attribut 34 der Schnittstelle 30, 36 ein Gewichtsfaktor 40 zugeordnet ist. Die für ein Schnittstellenelement 32 verwendbaren Attribute 34 sind üblicherweise fix, so dass solche Gewichtsfaktoren global festgelegt werden können. Ein Beispiel für Gewichtsfaktoren 40 zu den in den Darstellungen verwendeten Attributen 34 kann z. B. wie folgt angegeben werden:

60% für den Namen ("Name"), weil der Name wichtig ist und üblicherweise die Verwendung oder die Funktion der damit bezeichneten Variable beschreibt. Deshalb erhält dieses Attribut ein hohes Gewicht.

10% für den Umstand, ob es sich um einen Eingangswert für den jeweiligen Funktionsbaustein 28 ("Input") oder einen von dem Funktionsbaustein 28 zurückgegebenen Ausgangswert ("Output") oder um einen sowohl als Ein- wie auch als Ausgangswert verwendetes Datum handelt ("In/Out") .

10% für den Datentyp ("Datentyp"), weitere 10% für einen eventuellen Kommentar, 0% für eine Prüfsumme, weil z. B. Prüfsummen systembedingt stets eineindeutig sind und damit keinen Anhalt für eine eventuelle Zusammengehörigkeit von Elementen 32 einer alten und neuen Schnittstelle 30, 36 bieten.

Weitere 2% für eine Farbe, weil es sich hier um ein eher unwichtiges Attribut handelt, und schließlich 8% für eventuelle weitere Attribute.

Die Summe der Gewichte addiert sich zu 100%, so dass mit der Verwendung der Gewichtsfaktoren 40 auch eine Normierung der zu jeweils zwei Elementen 32 einer alten und neuen Schnittstelle 30, 36 ermittelten Merkmale 38 möglich ist.

FIG 5 zeigt sodann im Gegensatz zu der Darstellung in FIG 4 einen hier als "Korrelation" bezeichneten detaillierteren Vergleich der jeweils untersuchten Attribute 34. Zwischen "Param1" und "Dividend" besteht keine Korrelation, so dass als Ergebnis "0%" eingetragen ist. "Input" und "Input" sind hingegen identisch, so dass eine einhundertprozentige Korrelation besteht, usw. Als Korrelation kann - genauso wie in FIG 4 dargestellt - eine Überprüfung auf Identität der jeweils betrachteten Attribute 34 aufgefasst werden. Genauso kommt in Betracht, dass je nach Attribut 34 unterschiedliche Ermittlungsgrundlagen für eine Korrelation angesetzt werden. Für einen Vergleich der Attribute 34 "Param1" und "Dividend" kommt z. B. die Ermittlung eines empirischen Korrelationskoeffizienten auf der Basis der in den beiden Attributen 34 enthaltenen Buchstaben in Betracht. Nachdem dort allerdings keine Übereinstimmungen bestehen, ergibt sich auch bei diesem Ansatz eine Korrelation von 0%. Wenn bei der neuen Schnittstelle 36 in dem betrachteten Element 32 als Name nicht "Dividend", sondern "ParamA" gewählt worden wäre, wenn damit also die Namen "Param1" und "ParamA" verglichen würden, ergäbe sich bei dem Ansatz eines empirischen Korrelationskoeffizienten sehr wohl eine von "0" verschiedene Korrelation, und zwar eine nahe bei 100% liegende Korrelation.

Der Vergleich des betrachteten Elements 32 der alten Schnittstelle 30 und jedes Elements 32 der neuen Schnittstelle 36 ist in FIG 5 - genauso wie in FIG 4 - aus Übersichtlichkeitsgründen nur für eine begrenzte Anzahl von Attributen 34 dargestellt. Zusammen mit den dargestellten Attributen 34 ergeben sich folgende Korrelationswerte: 0%, 100%, 100%, 100%, 0%, 100%, 50%. Aufgrund der teilweise nicht dargestellten Attribute 34 sind auch nicht alle Gewichtsfaktoren 40 in FIG 5 dargestellt. Zusammen mit den dargestellten Gewichtsfaktoren 40 ergeben sich die folgenden Gewichtsfaktoren: 60%, 10%, 10%, 10%, 0%, 2%, 8%. Jeder Korrelationswert wird mit dem jeweiligen Gewichtsfaktor 40 gewichtet, so dass sich nach der mit dem Gewichtsfaktor 40 bewirkten Normierung die Werte 0%, 10%, 10%, 10%, 0%, 2%, 4% ergeben, was bei einer Summation zu einer Gesamtkorrelation oder dem Merkmal 38 von 36% führt (gewichtete Summe). Für den Vergleich des betrachteten Elements 32 der alten Schnittstelle 30 mit den weiteren Elementen 32 der neuen Schnittstelle 36 gilt das oben Gesagte entsprechend. Anstelle einer solchen gewichteten Summe kommt grundsätzlich auch jede mathematische oder logische Zusammenfassung der Korrelationen der Attribute in Betracht.

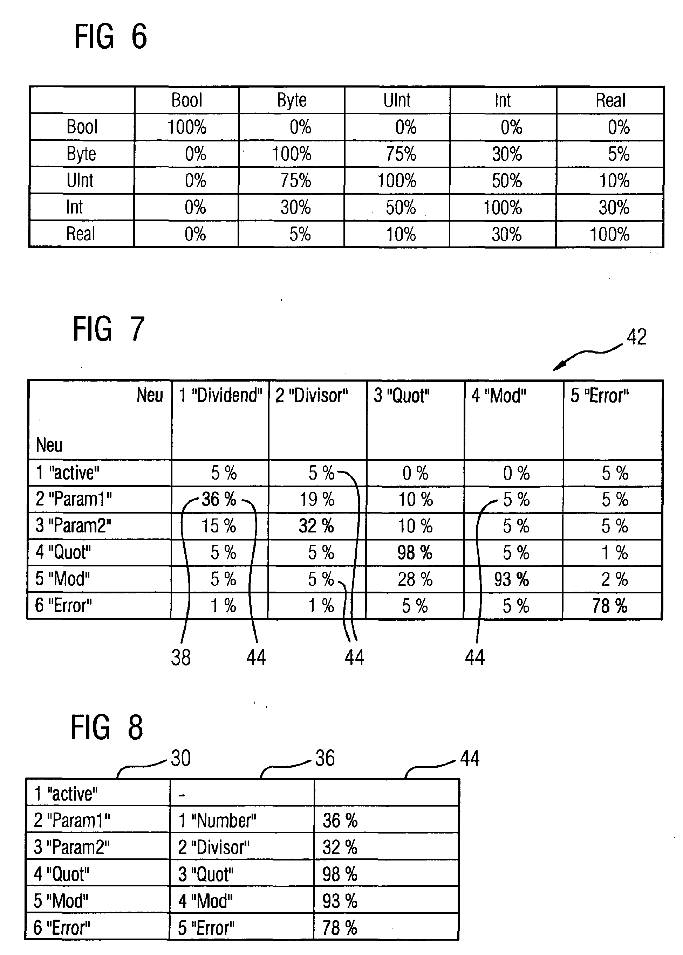

Hinzuweisen ist noch auf eine Möglichkeit zur Ermittlung einer Korrelation zwischen unterschiedlichen Datentypen, wie sie bei dem in FIG 5 dargestellten Beispiel in dem nächsten Block auftritt, in dem für das betreffende Element 32 in der alten Schnittstelle 30 als Datentyp "Int" und in der neuen Schnittstelle 36 als Datentyp "Uint" (unsigned integer) vorgesehen ist. Für solche Situationen, die im Übrigen entsprechend auch für das Attribut 34 "Sektionstyp" gelten, bietet sich eine Matrix an, wie sie mit exemplarischen Zahlenwerten in FIG 6 dargestellt ist. Für die Matrix in FIG 6 kommt selbstverständlich deren Erweiterung um weitere Basisdatentypen in Betracht. Des Weiteren kommt eine Matrix der in FIG 6 dargestellten Art für eine Ermittlung von Korrelationen weiterer Attribute, wie z. B. "Farbe" (vgl. FIG 3), in Betracht.

FIG 7 zeigt nunmehr eine Matrix 42, wie sie sich als Korrelationsmatrix aus dem vorstehend anhand von FIG 5 exemplarisch erläuterten Vergleich aller Elemente 32 der alten Schnittstelle 30 mit allen Elementen 32 der neuen Schnittstelle 36 ergibt. Die zuvor erläuterten Zahlenwerte, die als Gesamtkorrelation oder als Merkmal 38 zu jeweils einem Element 32 der alten und neuen Schnittstelle 30, 36 oder als Maß für eine Übereinstimmung eines Attributs 34 der alten Schnittstelle 30 mit einem Attribut 34 der neuen Schnittstelle 36 ermittelt wurden, sind in der Darstellung der Matrix 42 in FIG 7 in der zweiten Spalte mit 36%, 19%, 10%, 5% und 5% erkennbar. Die anderen Gesamtkorrelationen oder Merkmale 38 ergeben sich auf entsprechende Art und Weise und sind in der Matrix 42 in FIG 7 bereits zahlenmäßig vermerkt. In der Matrix 42 sind sämtliche Elemente 32 der alten Schnittstelle 30 durch jeweils eine Zeile der Matrix 42 und sämtliche Elemente 32 der neuen Schnittstelle 36 durch jeweils eine Spalte der Matrix 42 repräsentiert. Eine andere Sortierung, derart, dass die Elemente 32 der alten Schnittstelle 30 die Spalten der Matrix 42 und entsprechend die Elemente 32 der neuen Schnittstelle 36 die Zeilen der Matrix 42 darstellen, kommt selbstverständlich genauso in Betracht.

Der in FIG 5 als Beispiel für ein Merkmal 38 dargestellte Gesamtkorrelationsfaktor kann allgemein, also etwa auch für Fälle, bei denen eine Übereinstimmung der jeweils betrachteten Attribute 34 auf andere Art und Weise als durch eine jeweilige Korrelation ausgedrückt wird, als Übereinstimmungsindikator bezeichnet werden und entsprechend ist in der Matrix 42 in FIG 7 für jedes Elementepaar an der betreffenden Stelle der Matrix 42 als Merkmal 38 der jeweilige Übereinstimmungsindikator, hier also der Gesamtkorrelationsfaktor, eingetragen. (Aus Gründen der Übersichtlichkeit sind nur einzelne Übereinstimmungsindikatoren 44 mit der jeweiligen Bezugsziffer bezeichnet; jeder in der Matrix 42 dargestellte Zahlenwert ist ein Übereinstimmungsindikator 44.)

Auf dieser Basis wird nun eine Zusammengehörigkeit eines Elements 32 der alten Schnittstelle 30 und eines Elements 32 der neuen Schnittstelle 36 anhand eines jeweils größten Wertes der Übereinstimmungsindikatoren 44 in den betreffenden Zeilen oder Spalten der Matrix 42 erkannt. Danach ergibt sich die in FIG 8 dargestellte erkannte Zugehörigkeit zwischen den Elementen 32 der alten und der neuen Schnittstelle 30, 36. Obwohl sich aufgrund der Änderung des Namens der ersten beiden Elemente 32 in der neuen Schnittstelle 30 nur ein vergleichsweise geringer Übereinstimmungsindikator 44 ergibt, ist der jeweilige Übereinstimmungsindikator jedoch im Vergleich mit den Übereinstimmungsindikatoren in Bezug auf die anderen Elemente 32 der neuen Schnittstelle 36 maximal, so dass mit größter Wahrscheinlichkeit das durch den in einer Zeile maximalen Übereinstimmungsindikator 44 hervorgehobene Element 32 einer neuen Schnittstelle 36 dem jeweils im Zusammenhang betrachteten Element 32 der alten Schnittstelle 30 zuzuordnen ist.

Mit dem Ansatz gemäß der Erfindung und speziell der zuletzt beschriebenen Ausführungsform wird also das Erkennen von bei einer Änderung einer Schnittstelle 30, 36 gelöschten Elementen 32 und eine Zuordnung von geänderten Elementen 32 in weitem Umfang möglich.

Dass das Verfahren, wie hier und mit seinen Ausgestaltungen vorgestellt, erheblich leistungsfähiger und sicherer ist als eine Variante, welche die Werte einer bestimmten Gruppe von Attributen 34 jeweils auf Identität auch nach einer Änderung einer Schnittstelle untersucht, kann man sich leicht anhand der Kontrollüberlegung klarmachen, dass aufgrund der geänderten Namen von "Param1" in "Dividend" und "Param2" in "Divisor" wegen des bestehenden Unterschieds in diesem Attribut 34 eine Zusammengehörigkeit nicht erkannt worden wäre. Des Weiteren wären im vorliegenden Beispiel auch die mit den Namen "Mod" und "Error" bezeichneten Elemente 32 trotz des in der neuen Schnittstelle 36 unveränderten Namens nicht als zugehörig erkannt worden, weil (vgl. FIG 2 und FIG 3) Änderungen in den Attributen 34 mit der Bezeichnung "Sektionstyp" und "Datentyp" vorgenommen wurden.

Anhand der nur zur Verdeutlichung dargestellten Tabelle gemäß FIG 8 kann bei einer erkannten Zusammengehörigkeit eines Elements 32 der alten Schnittstelle 30 und eines Elements 32 der neuen Schnittstelle 36 bei jeder Verwendung der alten Schnittstelle 30 in der Automatisierungslösung 24 (FIG 1) das oder jedes Element 32 der alten Schnittstelle 30 durch das als mit diesem zusammengehörig ermittelte Element 32 der neuen Schnittstelle 36 ersetzt werden.

Die Entwicklungsumgebung 22 (FIG 1) ist ein Beispiel für ein Computerprogramm mit durch einen Computer, nämlich z. B. das Programmiergerät 20 mit dessen Verarbeitungseinheit 14, ausführbaren Programmcodeanweisungen zur Implementierung des Verfahrens und seiner Ausgestaltungen wie hier beschrieben, wenn das Computerprogramm auf einem Computer ausgeführt wird. Der Speicher 16 (FIG 1) des Programmiergeräts 20 ist ein Beispiel für ein Speichermedium mit einem durch einen Computer ausführbaren derartigen Computerprogramm. Alternative Speichermedien sind selbstverständlich elektromagnetische Speichermedien und dergleichen, also z. B. Festplatten. Schließlich ist das Programmiergerät 20 ein Beispiel für ein Computersystem mit einem Speicher 16, in den ein Computerprogramm zur Ausführung des hier beschriebenen Verfahrens geladen oder ladbar ist.

Einzelne im Vordergrund stehende Aspekte der hier eingereichten Beschreibung lassen sich damit kurz wie folgt zusammenfassen: Angegeben wird ein Verfahren zum Betrieb eines Automatisierungs- oder Programmiergerätes 12, 20 mit einer Entwicklungsumgebung 22 zum Erstellen von Automatisierungslösungen 24, wobei eine Automatisierungslösung 24 zumindest ein Computerprogramm 26 umfasst, in dem zum Austausch von Daten Schnittstellen 30, 36 vorgesehen sind, wobei eine Schnittstelle 30, 36 durch eine Anzahl von Elementen 32 und jedes Element 32 durch z. B. einen Namen und einen Typ als Attribut 34 definiert sind, wobei bei Änderungen an einer Schnittstelle 30, 36 mittels der Entwicklungsumgebung 22 automatisch durch die Entwicklungsumgebung 22 aufgrund der Änderung notwendige Anpassungen in der Automatisierungslösung 24 durchgeführt werden, mit folgenden Schritten: Zwischenspeichern der von der Änderung betroffenen Schnittstelle vor der Änderung - alte Schnittstelle 30 -; Ermitteln von zumindest einem Merkmal 38 zu jeweils einem Element 32 der alten Schnittstelle 30 und einem Element 32 der geänderten Schnittstelle - neue Schnittstelle 36 -; Zuordnen von Elementen 32 der alten Schnittstelle 30 zu Elementen 32 der neuen Schnittstelle 36 anhand der Merkmale 38.

**Patentansprüche**

1. Verfahren zum Betrieb eines Automatisierungs- oder Programmiergerätes (12, 20),
wobei das Automatisierungs- oder Programmiergerät (12, 20) Zugriff auf einen Speicher (16) hat,
wobei in dem Speicher (16) eine Entwicklungsumgebung (22) zum Erstellen von Automatisierungslösungen (24) vorgehalten wird, wobei eine mit der Entwicklungsumgebung (22) erstellte Automatisierungslösung (24) zumindest ein Computerprogramm (26) umfasst und wobei in dem Computerprogramm (26) oder zwischen mindestens zwei Computerprogrammen (26) zum Austausch von Daten Schnittstellen (30, 36) vorgesehen sind,
wobei eine Schnittstelle (30, 36) durch eine Anzahl von Elementen (32) und jedes Element (32) durch zumindest ein Attribut (34), insbesondere einen Namen und einen Typ als Attribut (34), definiert sind,
wobei bei Änderungen an einer Schnittstelle (30, 36) mittels der Entwicklungsumgebung (22) automatisch durch die Entwicklungsumgebung (22) aufgrund der Änderung notwendige Anpassungen in der Automatisierungslösung (24) durchgeführt werden,
mit folgenden Schritten:

automatisches Zwischenspeichern der von der Änderung betroffenen Schnittstelle vor der Änderung - alte Schnittstelle (30) -;
automatisches Ermitteln von zumindest einem Merkmal (38) zu jeweils einem Element (32) der alten Schnittstelle (30) und einem Element (32) der geänderten Schnittstelle - neue Schnittstelle (36) -;
automatisches Zuordnen von Elementen (32) der alten Schnittstelle (30) zu Elementen (32) der neuen Schnittstelle (36) anhand der Merkmale (38),
wobei bei einer erkannten Zusammengehörigkeit eines Elements (32) der alten Schnittstelle (30) und eines Elements (32) der neuen Schnittstelle (36) bei jeder Verwendung der alten Schnittstelle (30) in der Automatisierungslösung (24) das oder jedes Element (32) der alten Schnittstelle (30) automatisch durch das als mit diesem zusammengehörig ermittelte Element (32) der neuen Schnittstelle (36) ersetzt wird.

2. Verfahren nach Anspruch 1, wobei als Merkmal (38) jeweils ein Maß für eine Übereinstimmung eines Attributs (34) der alten Schnittstelle (30) mit einem Attribut (34) der neuen Schnittstelle (36) fungiert.

3. Verfahren nach Anspruch 2, wobei als Maß für eine Übereinstimmung eines Attributs (34) der alten Schnittstelle (30) mit einem Attribut (34) der neuen Schnittstelle (36) ein empirischer Korrelationskoeffizient fungiert.

4. Verfahren nach Anspruch 2, wobei als Maß für eine Übereinstimmung eines Attributs (34) der alten Schnittstelle (30) mit einem Attribut (34) der neuen Schnittstelle (36) ein in einer Matrix vorgegebener oder vorgebbarer Korrelationswert fungiert.

5. Verfahren nach einem der vorangehenden Ansprüche, wobei bei einer Mehrzahl von Attributen (34) als Merkmal (38) ein Maß für eine Übereinstimmung sämtlicher Attribute (34) der alten Schnittstelle (30) mit sämtlichen Attributen (34) der neuen Schnittstelle (36) ermittelt wird.

6. Verfahren nach einem der vorangehenden Ansprüche, wobei bei einer Mehrzahl von Attributen (34) jedem Merkmal (38) oder jedem Attribut (34) ein Gewichtsfaktor (40) zugeordnet ist und wobei als Maß für eine Übereinstimmung sämtlicher Attribute (34) der alten und neuen Schnittstelle (30, 36) als Übereinstimmungsindikator (44) eine mit den Gewichtsfaktoren (40) gewichtete Summe eines jeweils als Maß für eine Übereinstimmung einzelner Attribute (34) ermittelten Wertes ermittelt wird.

7. Verfahren nach Anspruch 6, wobei jedes Element (32) der neuen Schnittstelle (36) mit jedem Element (32) der alten Schnittstelle (36) durch Ermittlung eines jeweiligen Übereinstimmungsindikators (44) verglichen wird.

8. Verfahren nach Anspruch 7, wobei in einer Matrix (42), in der sämtliche Elemente (32) der alten Schnittstelle (30) durch eine Zeile oder Spalte und in der sämtliche Elemente (32) der neuen Schnittstelle (36) entsprechend durch eine Spalte bzw. Zeile repräsentiert sind, für jedes Elementepaar (32, 32) an der betreffenden Stelle der Matrix (42) der jeweilige Übereinstimmungsindikator (44) eingetragen wird und wobei eine Zusammengehörigkeit eines Elements (32) der alten Schnittstelle (30) und eines Elements (32) der neuen Schnittstelle (36) anhand eines jeweils größten Wertes der Übereinstimmungsindikatoren (44) in den betreffenden Zeilen oder Spalten der Matrix (42) erkannt wird.

9. Computerprogramm (22), das durch einen Computer ausführbare Programmcodeanweisungen zur Implementierung des Verfahrens nach einem der Ansprüche 1 bis 8 umfasst, wenn das Computerprogramm auf einem Computer ausgeführt wird.

10. Speichermedium mit einem durch einen Computer ausführbaren Computerprogramm (22) gemäß Anspruch 9.

11. Computersystem mit einem Speicher (16), in den ein Computerprogramm (22) nach Anspruch 9 geladen ist.

**Claims**

1. Method for operating an automation or programming device (12, 20),
   wherein the automation or programming device (12, 20) has access to a memory (16),
   wherein a development environment (22) for creating automation solutions (24) is preserved in the memory (16),
   wherein an automation solution (24) created with the development environment (22) includes at least one computer program (26) and wherein interfaces (30, 36) are provided in the computer program (26) or between at least two computer programs (26) for exchanging data, wherein an interface (30, 36) is defined by a number of elements (32) and each element (32) is defined by at least one attribute (34), in particular a name and a type as an attribute (34), wherein in the event of changes to an interface (30, 36) by means of the development environment (22) necessary adjustments are automatically made to the automation solution (24) by the development environment (22) on account of said change,
   with the following steps:

   automatically buffering the interface affected by the change prior to said change - old interface (30)-;
   automatically determining at least one feature (38) relating in each case to an element (32) of the old interface (30) and an element (32) of the modified interface - new interface (36);
   automatically assigning elements (32) of the old interface (30) to elements (32) of the new interface (36) with the aid of features (38),
   wherein with an identified association of an element (32) of the old interface (30) and an element (32) of the new interface (36) with each use of the old interface (30) in the automation solution (24), the or each element (32) of the old interface (30) is automatically replaced by the element (32) of the new interface (36) which was determined as associated herewith.

2. Method according to claim 1, wherein a measure of an agreement of an attribute (34) of the old interface (30) with an attribute (34) of the new interface (36) functions in each case as a feature (38).

3. Method according to claim 2, wherein an empirical correlation coefficient functions as a measure of an agreement of an attribute (34) of the old interface (30) with an attribute (34) of the new interface (36).

4. Method according to claim 2, wherein a correlation value which is predetermined or predeterminable in a matrix functions as a measure of an agreement of an attribute (34) of the old interface (30) with an attribute (34) of the new interface (36).

5. Method according to one of the preceding claims, wherein with a plurality of attributes (34), a measure of an agreement of all attributes (34) of the old interface (30) with all attributes (34) of the new interface is determined as a feature (38).

6. Method according to one of the preceding claims, wherein with a plurality of attributes (34), a weighting factor (40) is assigned to each feature (38) or each attribute (34) and wherein as a measure of an agreement of all attributes (34) of the old and new interface (30, 36) as an agreement indicator (44), a total weighted with the weighting factors (40) of a value determined as a measure of an agreement of individual attributes (34) is determined.

7. Method according to claim 6, wherein each element (32) of the new interface (36) is compared with each element (32) of the old interface (36) by determining a respective agreement indicator (44).

8. Method according to claim 7, wherein the respective agreement indicator (44) is plotted in a matrix (42), in which all elements (32) of the old interface (30) are represented by a line or column and in which all elements (32) of the new interface (36) are represented accordingly by a line or column, for each element pair (32, 32) on the relevant point of the matrix (42) and wherein an association of an element (32) of the old interface (30) and an element (32) of the new interface (36) is identified with the aid of a respectively largest value of the agreement indicators (44) in the relevant lines or columns of the matrix (42).

9. Computer program (22), which includes program code instructions which can be run by a computer in order to implement the method according to one of claims 1 to 8 if the computer program is run on a computer.

10. Storage medium having a computer program (22) which can be run by a computer according to claim 9.

11. Computer system having a memory (16), in which a computer program (22) according to claim 9 is loaded.

## Revendications

1. Procédé pour faire fonctionner un appareil ( 12, 20 ) d'automatisation ou de programmation,
dans lequel l'appareil ( 12, 20 ) d'automatisation ou de programmation a un accès à une mémoire ( 16 ),
dans lequel on tient en réserve dans la mémoire ( 16 ) un environnement ( 22 ) de développement, pour l'établissement de solutions ( 24 ) d'automatisation, une solution ( 24 ) d'automatisation élaborée par l'environnement ( 22 ) de développement comprenant au moins un programme ( 26 ) d'ordinateur et il est prévu des interfaces ( 30, 36 ) pour l'échange de données dans le programme ( 26 ) d'ordinateur ou entre au moins deux programmes ( 26 ) d'ordinateur,
dans lequel une interface ( 30, 36 ) est définie par un certain nombre d'éléments ( 32 ) et chaque élément ( 32 ) par au moins un attribut ( 34 ), notamment un nom et un type comme attribut ( 34 ),
dans lequel, s'il se produit des modifications sur une interface ( 30, 36 ) au moyen de l'environnement ( 22 ) de développement, il s'effectue automatiquement par l'environnement ( 22 ) de développement, sur la base de la modification, les adaptations nécessaires de la solution ( 24 ) d'automatisation,
comprenant les stades suivante

mise en mémoire tampon automatique de l'interface concernée par la modification avant la modification - interface ( 30 ) ancienne - ;
détermination automatique d'au moins une caractéristique ( 38 ) se rapportant respectivement à un élément ( 32 ) de l'interface ( 30 ) ancienne et à un élément ( 32 ) de l'interface modifiée - interface ( 36 ) nouvelle - ;
affectation automatique d'éléments ( 32 ) de l'interface ( 30 ) ancienne à des éléments ( 32 ) de l'interface ( 36 ) nouvelle à l'aide des caractéristiques ( 38 ),
dans lequel, lorsque l'on reconnaît l'affinité d'un élément ( 32 ) de l'interface ( 30 ) ancienne et d'un élément ( 32 ) de l'interface ( 36 ) nouvelle, on remplace, pour chaque utilisation de l'interface ( 30 ) ancienne, dans la solution ( 24 ) d'automatisation le ou chaque élément ( 32 ) de l'interface ( 30 ) ancienne automatiquement par l'élément ( 32 ) déterminé comme ayant de l'affinité avec celui-ci, de l'interface ( 36 ) nouvelle.

2. Procédé suivant la revendication 1, dans lequel on se sert comme caractéristique ( 38 ) respectivement de l'étendue d'une coïncidence d'un attribut ( 34 ) d'une interface ancienne avec un attribut ( 34 ) de l'interface ( 36 ) nouvelle.

3. Procédé suivant la revendication 2, dans lequel on se sert d'un coefficient de corrélation empirique comme étendue d'une coïncidence d'un attribut ( 34 ) de l'interface ( 30 ) ancienne avec un attribut ( 34 ) de l'interface ( 36 ) nouvelle.

4. Procédé suivant la revendication 2, dans lequel on se sert d'une valeur de corrélation donnée à l'avance dans une matrice ou pouvant l'être comme étendue d'une coïncidence d'un attribut ( 34 ) de l'interface ( 30 ) ancienne avec un attribut ( 34 ) de l'interface ( 36 ) nouvelle.

5. Procédé suivant l'une des revendications précédentes, dans lequel, s'il y a une pluralité d'attribut ( 34 ), on détermine comme caractéristique ( 38 ) une étendue de la coïncidence de tous les attributs ( 34 ) de l'interface ( 30 ) ancienne avec tous les attributs ( 34 ) de l'interface ( 36 ) nouvelle.

6. Procédé suivant l'une des revendications précédentes, dans lequel, s'il y a une pluralité d'attributs ( 34 ), on affecte un facteur ( 40 ) de pondération à chaque caractéristique ( 38 ) ou à chaque attribut ( 34 ) et dans lequel on détermine, comme étendue de la coïncidence de tous les attributs ( 34 ) des interfaces ( 30, 36 ) anciennes et nouvelles, comme indicateur ( 44 ) de coïncidence, une somme, pondérée par les facteurs ( 40 ) de pondération, d'une valeur déterminée respectivement comme étendue de la coïncidence d'attributs ( 34 ) individuels.

7. Procédé suivant la revendication 6, dans lequel on compare chaque élément ( 32 ) de l'interface ( 36 ) nouvelle à chaque élément ( 32 ) de l'interface ( 36 ) ancienne en déterminant un indicateur ( 44 ) respectif de coïncidence.

8. Procédé suivant la revendication 7, dans lequel, dans une matrice ( 42 ), dans laquelle tous les éléments ( 32 ) de l'interface ( 30 ) ancienne sont représentés par une ligne ou par une colonne et dans laquelle tous les éléments ( 32 ) de l'interface ( 36 ) nouvelle sont représentés d'une manière correspondante par une colonne et par une ligne, on porte pour chaque paire ( 32, 32 ) d'éléments à l'endroit concerné de la matrice ( 42 ) l'indicateur ( 44 ) respectif de coïncidence et dans lequel on détecte une affinité d'un élément ( 32 ) de l'interface ( 30 ) ancienne et d'un élément ( 32 ) de l'interface ( 36 ) nouvelle au moyen d'une valeur respectivement la plus grande des indicateurs ( 44 ) de coïncidence dans les lignes ou dans les colonnes concernées de la matrice ( 42 ).

9. Programme ( 22 ) d'ordinateur, qui comprend des instructions de code de programme pouvant être exécutées par un ordinateur, pour la mise en oeuvre du procédé suivant l'une des revendications 1 à 8, lorsque le programme d'ordinateur est réalisé sur un ordinateur.

10. Support de mémoire ayant un programme ( 22 ) d'ordinateur pouvant être réalisé par un ordinateur suivant la revendication 9.

11. système d'ordinateur comprenant une mémoire ( 16 ) dans laquelle est chargé un programme ( 22 ) d'ordinateur suivant la revendication 9.

# FIG 1
Stand der Technik

## FIG 2

30

| Index | Name | Sektionstyp | Datentyp | Kommentar | Prüfsumme | Farbe | Andere Attribute |
|---|---|---|---|---|---|---|---|
| 1 | Active | Input | Bool | Active / Inactive | 1001 | Rot | |
| 2 | Param 1 | Input | Int | Dividend | 1002 | Blau | |
| 3 | Param 2 | Input | Int | Divisor | 1003 | Blau | |
| 4 | Quot | Output | Int | Quotient | 1004 | Blau | |
| 5 | Mod | Output | Int | Rest | 1005 | Blau | |
| 6 | Error | Output | Bool | Fehler, z.B. Division durch Null | 1006 | Rot | |

34   34   34   34   34   34   34   34

## FIG 3

36

| Index | Name | Sektionstyp | Datentyp | Kommentar | Prüfsumme | Farbe | Andere Attribute |
|---|---|---|---|---|---|---|---|
| | | | | | | | |
| 1 | Dividend | Input | Int | Dividend | 2002 | Blau | |
| 2 | Divisor | Input | UInt | Divisor | 2003 | Blau | |
| 3 | Quot | Output | Int | Quotient | 2004 | Grün | |
| 4 | Mod | Output | UInt | Rest | 2005 | Grün | |
| 5 | Error | In / Out | Bool | Enable | 2006 | Rot | |

34   34   34   34   34   34   34   34

# FIG 4

| | Name | Sektionstyp | Datentyp | | | | |
|---|---|---|---|---|---|---|---|
| | | | | | | | |

34    34    34

32 →

| Alt: 2 | Param 1 | Input | Int | | | | |
|---|---|---|---|---|---|---|---|
| Neu: 1 | Dividend | Input | Int | | | | |
| | - | + | + | | | | |
| | | 1 | | | | | |

38    38    38

| Alt: 2 | Param 1 | Input | Int | | | | |
|---|---|---|---|---|---|---|---|
| Neu: 2 | Divisor | Input | UInt | | | | |
| | - | + | - | | | | |
| | | 0 | | | | | |

| Alt: 2 | Param 1 | Input | Int | | | | |
|---|---|---|---|---|---|---|---|
| Neu: 3 | Quot | Output | Int | | | | |
| | - | - | + | | | | |
| | | 0 | | | | | |

| Alt: 2 | Param 1 | Input | Int | | | | |
|---|---|---|---|---|---|---|---|
| Neu: 4 | Mod | Output | UInt | | | | |
| | - | - | - | | | | |
| | | 0 | | | | | |

| Alt: 2 | Param 1 | Input | Int | | | | |
|---|---|---|---|---|---|---|---|
| Neu: 5 | Error | In / Out | Bool | | | | |
| | - | - | - | | | | |
| | | 0 | | | | | |

34    34  34

# FIG 5

| | Name | Sektionstyp | Datentyp | | | | |
|---|---|---|---|---|---|---|---|

| | Name | Sektionstyp | Datentyp | | | | |
|---|---|---|---|---|---|---|---|
| Alt: 2 | Param 1 | Input | Int | | | | |
| Neu: 1 | Dividend | Input | Int | | | | |
| Korrelation | 0% | 100% | 100% | | | | |
| Gewicht | 60% | 10% | 10% | | | | |
| Total | 0% | 10% | 10% | | | | |
| | | | 36% | | | | |

| | | | | | | | |
|---|---|---|---|---|---|---|---|
| Alt: 2 | Param 1 | Input | Int | | | | |
| Neu: 2 | Divisor | Input | UInt | | | | |
| Korrelation | 0% | 100% | 50% | | | | |
| Gewicht | 60% | 10% | 10% | | | | |
| Total | 0% | 10% | 5% | | | | |
| | | | 19% | | | | |

| | | | | | | | |
|---|---|---|---|---|---|---|---|
| Alt: 2 | Param 1 | Input | Int | | | | |
| Neu: 3 | Quot | Output | Int | | | | |
| Korrelation | 0% | 0% | 100% | | | | |
| Gewicht | 60% | 10% | 10% | | | | |
| Total | 0% | 0% | 10% | | | | |
| | | 10% | | | | | |

| | | | | | | | |
|---|---|---|---|---|---|---|---|
| Alt: 2 | Param 1 | Input | Int | | | | |
| Neu: 4 | Mod | Output | UInt | | | | |
| Korrelation | 0% | 0% | 50% | | | | |
| Gewicht | 60% | 10% | 10% | | | | |
| Total | 0% | 0% | 5% | | | | |
| | | 5% | | | | | |

| | | | | | | | |
|---|---|---|---|---|---|---|---|
| Alt: 2 | Param 1 | Input | Int | | | | |
| Neu: 5 | Error | In / Out | Bool | | | | |
| Korrelation | 0% | 50% | 0% | | | | |
| Gewicht | 60% | 10% | 10% | | | | |
| Total | 0% | 5% | 0% | | | | |
| | | 5% | | | | | |

## FIG 6

|       | Bool | Byte | UInt | Int  | Real |
|-------|------|------|------|------|------|
| Bool  | 100% | 0%   | 0%   | 0%   | 0%   |
| Byte  | 0%   | 100% | 75%  | 30%  | 5%   |
| UInt  | 0%   | 75%  | 100% | 50%  | 10%  |
| Int   | 0%   | 30%  | 50%  | 100% | 30%  |
| Real  | 0%   | 5%   | 10%  | 30%  | 100% |

## FIG 7

42

| Neu \ Neu   | 1 "Dividend" | 2 "Divisor" | 3 "Quot" | 4 "Mod" | 5 "Error" |
|-------------|--------------|-------------|----------|---------|-----------|
| 1 "active"  | 5 %          | 5 %         | 0 %      | 0 %     | 5 %       |
| 2 "Param1"  | 36 %         | 19 %        | 10 %     | 5 %     | 5 %       |
| 3 "Param2"  | 15 %         | 32 %        | 10 %     | 5 %     | 5 %       |
| 4 "Quot"    | 5 %          | 5 %         | 98 %     | 5 %     | 1 %       |
| 5 "Mod"     | 5 %          | 5 %         | 28 %     | 93 %    | 2 %       |
| 6 "Error"   | 1 %          | 1 %         | 5 %      | 5 %     | 78 %      |

38    44    44    44

## FIG 8

| | 30 | 36 | 44 |
|-------------|-------------|------|
| 1 "active"  | -           |      |
| 2 "Param1"  | 1 "Number"  | 36 % |
| 3 "Param2"  | 2 "Divisor" | 32 % |
| 4 "Quot"    | 3 "Quot"    | 98 % |
| 5 "Mod"     | 4 "Mod"     | 93 % |
| 6 "Error"   | 5 "Error"   | 78 % |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19704855 A
- EP 0067057 A